# NEUE EUROPÄISCHE PATENTSCHRIFT

(11) **EP 3 390 180 B2**
(45) Veröffentlichungstag und Bekanntmachung des Hinweises auf die Entscheidung über den Einspruch: **16.11.2022**
(45) Hinweis auf die Patenterteilung: 14.08.2019
(21) Anmeldenummer: 16791405.0
(22) Anmeldetag: 07.11.2016
(51) Int. Cl.: B60T 13/58, B60T 13/66, B60T 13/74, F16D 55/226

(54) **VERFAHREN ZUM LÖSEN EINER ELEKTROMOTORISCH AKTUIERTEN, ERSTEN BREMSEINRICHTUNG, STEUERGERÄT FÜR EIN BREMSSYSTEM EINES FAHRZEUGS, BREMSSYSTEM FÜR EIN FAHRZEUG, UND FAHRZEUG MIT EINEM SOLCHEN BREMSSYSTEM**
METHOD FOR RELEASING AN ELECTRIC ACTUATED FIRST BRAKE, CONTROLLER FOR A VEHICLE BRAKING SYSTEM, BRAKING SYSTEM AND VEHICLE WITH SAID BRAKINGSYSTEM
MÉTHODE POUR RELÂCHER UND FREIN ÉLECTRIQUE, CONTRÔLEUR POUR UN SYSTÈME DE FREIN POUR VEHICULE ET VEHICULE DOTÉ DE CE FREIN.

(30) Priorität: 14.12.2015 DE 102015225041
(43) Veröffentlichungstag der Anmeldung: 24.10.2018
(73) Patentinhaber: Robert Bosch GmbH, 70442 Stuttgart (DE)
(72) Erfinder: WOLFF, Helmut, 74199 Untergruppenbach (DE); ENGLERT, Andreas, 74199 Untergruppenbach (DE)
(86) Internationale Anmeldenummer: PCT/EP2016/076848
(87) Internationale Veröffentlichungsnummer: WO 2017/102176

(56) Entgegenhaltungen:
- WO-A1-2004/022394
- WO-A1-2005/073043
- DE-A1-102005 030 621

## Beschreibung

Die Erfindung betrifft ein Verfahren zum Lösen einer elektromotorisch aktuierten Bremseinrichtung, ein Steuergerät für ein Bremssystem eines Fahrzeugs, ein Bremssystem für ein Fahrzeug mit einem solchen Steuergerät, und ein Fahrzeug mit einem solchen Bremssystem.

### Stand der Technik

Bei einer elektromotorisch aktuierten Bremseinrichtung wird vorzugsweise eine Klemmkraft über ein Spindel-Mutter-System erzeugt, wobei das Spindel-Mutter-System vorzugsweise in einem Bremskolben angeordnet ist. Eine solche Bremseinrichtung hat aufgrund der elektromechanischen Ansteuerung und der konstruktiv bedingten mechanischen Übersetzung mittels Getriebestufen insbesondere im Vergleich zu rein hydraulischen Bremseinrichtungen längere Applikationszeiten für Zuspann- und Lösevorgänge. Dabei kann es insbesondere dazu kommen, dass die Zeit für einen Klemmkraftabbau mit einem zügigen Anfahrwunsch eines Fahrers eines Fahrzeugs in Konflikt gerät. Als Beispielfall, um das Potential dieses Verfahrens aufzuzeigen, kann ein sogenannter Kavalierstart betrachtet werden, der ausgehend von einem Zustand mit zugespannter, elektromotorisch aktuierter Parkbremseinrichtung erfolgen soll. Die Parkbremseinrichtung muss dann in Löserichtung angesteuert werden, bevor das Fahrzeug Geschwindigkeit aufnehmen kann. Insbesondere bei leistungsstarken Fahrzeugen, oder bei elektrisch angetriebenen Fahrzeugen, bei denen das Anfahrdrehmoment schnell aufgebaut beziehungsweise bereits bei stehendem Motor zur Verfügung steht, kann das Anfahrmoment bereitstehen, bevor die Haltekraft der Parkbremseinrichtung abgebaut ist.

Es zeigt sich, dass ein Hauptgrund für das vergleichsweise langsame Lösen einer elektromotorisch aktuierten Bremseinrichtung darin zu sehen ist, dass solche Systeme selbsthemmend ausgelegt sind und aufgrund der Zuspannkraft eine hohe Reibung erfahren, sodass ein Drehzahlaufbau des Elektromotors unter vergleichsweise hoher Last erfolgt, wobei eine Leerlaufdrehzahl erst relativ spät erreicht werden kann. Aus der WO 2005/073043 A1 ist es bekannt, eine erste, elektromotorisch aktuierte Bremseinrichtung durch Aktivieren einer zweiten, hydraulisch aktuierten Bremseinrichtung zu entlasten, und so ein verbessertes Lösen der ersten Bremseinrichtung zu ermöglichen. Bei einer solchen Vorgehensweise wird allerdings zuerst ein gewünschter Hydraulikdruck vollständig aufgebaut, bevor die elektromotorisch aktuierte Bremseinrichtung in Löserichtung angesteuert wird. Dies kostet wiederum Zeit, was den Lösevorgang verzögert.

Weiterhin ist aus dem Stand der Technik die WO 2004/022394 A1 bekannt. Die Schrift betrifft ein Verfahren zur Betätigung einer elektromechanischen Feststellbremsvorrichtung bei einer mittels eines elektromechanischen Aktuators betätigbaren Bremse, bei der der Aktuator aus einem Elektromotor sowie einem dem Elektromotor nachgeschalteten Untersetzungsgetriebe zur Umwandlung einer Drehbewegung in eine translatorische Bewegung besteht, und bei der die elektromechanische Feststellbremsvorrichtung als ein Verriegelungsmechanismus ausgebildet ist, der die Drehbewegung des Aktuators in Löserichtung verhindern kann und der erst wieder durch weiteres Zuspannen gelöst werden kann.

### Offenbarung der Erfindung

Weiterhin ist aus dem Stand der Technik die DE 10 2005 030621 A1 bekannt. Diese Schrift betrifft eine Scheibenbremse in selbstverstärkender Bauart und Ansteuerverfahren für eine selbstverstärkende Bremse. Aus der Offenlegungsschrift JP 2010 052643 A ist außerdem ein gattungsgemäßes Verfahren zum Lösen einer Bremsanlage mit zwei Bremseinrichtungen bekannt.

Der Erfindung liegt die Aufgabe zugrunde, ein Vefahren zum Lösen einer elektromotorisch aktuierten, ersten Bremseinrichtung, ein Steuergerät für ein Bremssystem, ein Bremssystem für ein Fahrzeug, und ein Fahrzeug mit einem solchen Bremssystem zu schaffen, wobei die genannten Nachteile nicht auftreten. Insbesondere soll ein verbessertes, insbesondere schnelleres Lösen der elektromotorisch aktuierten Bremseinrichtung möglich sein.

Die Aufgabe wird gelöst, indem die Gegenstände der unabhängigen Ansprüche geschaffen werden. Vorteilhafte Ausgestaltungen ergeben sich aus den Unteransprüche.

Die Aufgabe wird gelöst, indem ein Verfahren mit Merkmalen des Anspruchs 1 zum Lösen einer elektromotorisch aktuierten, ersten Bremseinrichtung für ein Fahrzeug geschaffen wird, wobei im zugespannten Zustand der ersten Bremseinrichtung eine zweite Bremseinrichtung für das Fahrzeug in eine Zuspannrichtung angesteuert wird, um an einem beiden Bremseinrichtungen gemeinsam zugeordneten Bremskolben eine vorbestimmte Zuspannkraft zu erzeugen. Die erste Bremseinrichtung wird in eine Löserichtung angesteuert, bevor die zweite Bremseinrichtung die vorbestimmte Zuspannkraft erreicht. Es wird also nicht abgewartet, bis die vorbestimmte Zuspannkraft durch die zweite Bremseinrichtung vollständig aufgebaut ist, vielmehr erfolgt eine parallele Ansteuerung der ersten Bremseinrichtung und der zweiten Bremseinrichtung, wobei die erste Bremseinrichtung angesteuert wird, noch bevor die zweite Bremseinrichtung die vorbestimmte Zuspannkraft aufgebaut hat. Dadurch wird die erste Bremseinrichtung durch die zweite Bremseinrichtung entlastet, was den Lösevorgang beschleunigt, und schon zu einem vergleichsweise frühen Zeitpunkt angesteuert, was sich zusätzlich positiv auf die Beschleunigung des Lösevorgangs auswirkt. Es kann also insgesamt ein sehr schnelles Lösen der ersten Bremseinrichtung erfolgen.

Unter einer Bremseinrichtung wird insbesondere eine Einrichtung verstanden, die eingerichtet ist, um ein Fahrzeug zu verzögern und/oder im Stand stationär zu halten, sodass das Fahrzeug - auch an einer Steigung oder einem Gefälle - nicht wegrollt.

Bevorzugt handelt es sich bei der ersten Bremseinrichtung um eine automatisierte Parkbremse (APB), besonders bevorzugt um eine automatisierte Parkbremse, welche Elektromotoren aufweist, die sich direkt an Radbremsen des Fahrzeugs, insbesondere an Radbremsen einer Hinterachse, befinden. Ein solches System wird typischerweise als APB-M (Motor on Caliper) bezeichnet.

Unter einem zugespannten Zustand wird ein Zustand der Bremseinrichtung vestanden, in welchem diese eine Bremskraft entfaltet. Die Bremseinrichtung ist insbesondere zwischen einem zugespannten Zustand und einem gelösten Zustand verlagerbar, wobei die Bremseinrichtung im gelösten Zustand keine Bremskraft entfaltet.

Unter einer Zuspannrichtung wird entsprechend eine Richtung der Ansteuerung der Bremseinrichtung verstanden, in welcher diese von dem gelösten Zustand in den zugespannten Zustand verlagert wird. Unter einer Löserichtung wird entsprechend eine Richtung verstanden, in welcher die Bremseinrichtung von dem zugespannten Zustand in den gelösten Zustand verlagert wird.

Der ersten Bremseinrichtung und der zweiten Bremseinrichtung ist der Bremskolben gemeinsam zugeordnet, was bedeutet, dass sowohl die erste Bremseinrichtung als auch die zweite Bremseinrichtung auf denselben Bremskolben wirken.

Untereinem Bremskolbenwirddabeiinsbesondere ein Element verstanden, welches einen Bremsbelag trägt und eingerichtet und angeordnet ist, um den Bremsbelag gegen eine Bremsscheibe zu verschieben. Die erste Bremseinrichtung weist vorzugsweise ein Spindel-Mutter-System auf, welches in dem Bremskolben angeordnet ist. Die zweite Bremseinrichtung wirkt bevorzugt auf andere Weise, insbesondere hydraulisch, auf den Bremskolben.

Die zweite Bremseinrichtung ist insbesondere von der ersten Bremseinrichtung verschieden. Bevorzugt ist die zweite Bremseinrichtung nicht elektromotorisch aktuiert, sondern auf andere Weise, insbesondere hydraulisch. Vorzugsweise wird als zweite Bremseinrichtung eine Betriebsbremse eines Fahrzeugs verwendet, das heißt eine Bremseinrichtung, die im normalen, fehlerfreien Fahrbetrieb des Fahrzeugs zu dessen Verzögerung verwendet wird.

Dass die erste Bremseinrichtung angesteuert wird, bevor die zweite Bremseinrichtung die vorbestimmte Zuspannkraft erreicht, schließt ein, dass die erste Bremseinrichtung angesteuert wird, bevor die zweite Bremseinrichtung in die Zuspannrichtung angesteuert wird, oder dass die erste Bremseinrichtung angesteuert wird, nachdem die zweite Bremseinrichtung in die Zuspannrichtung angesteuert wird. In beiden Fällen ergeben sich die zuvor genannten Vorteile.

Gemäß einer Weiterbildung der Erfindung ist allerdings vorgesehen, dass die erste Bremseinrichtung und die zweite Bremseinrichtung simultan angesteuert werden. Dies ermöglicht eine ebenso einfache wie besonders schnelle Ansteuerung der Bremseinrichtungen. Insbesondere werden die erste Bremseinrichtung und die zweite Bremseinrichtung bevorzugt gleichzeitig angesteuert. Dies kann insbesondere bedeuten, dass ein Steuergerät für ein Bremssystem, welches die erste Bremseinrichtung und die zweite Bremseinrichtung aufweist, Ansteuerbefehle an die beiden Bremseinrichtungen simultan, insbesondere zeitgleich, absetzt, oder dass das Steuergerät diese Befehle - soweit es nicht für ein zeitgleiches Absetzen der Befehle eingerichtet ist - unmittelbar nacheinander, das heißt insbesondere ohne eigens vorgesehene Verzögerung oder Totzeit, absetzt.

Gemäß einer Weiterbildung der Erfindung ist vorgesehen, dass die Zuspannkraft von der zweiten Bremseinrichtung hydraulisch erzeugt wird. Dies ist insbesondere dann der Fall, wenn es sich bei der zweiten Bremseinrichtung um eine Betriebsbremse eines Fahrzeugs handelt, die vorzugsweise einen hydraulischen Bremskreis mit einem Bremsverstärker zum Aufbau eines hydraulischen Bremsdrucks aufweist. Als zweite Bremseinrichtung kann auch ein elektronisches Bremskraftverteilungssystem (Elektronisches Stabilitätsprogramm - ESP) genutzt werden, insbesondere wenn dieses eingerichtet ist, um einen aktiven hydraulischen Druckaufbau zu verwirklichen. Zusätzlich oder alternativ ist es möglich, dass die zweite Bremseinrichtung einen vakuumfreien, insbesondere elektrischen oder elektronischen Bremskraftverstärker aufweist.

Erfindungsgemäß ist vorgesehen, dass das Verfahren nur bei einem vom Fahrer angeforderten Kavalierstart bei einem vollständigen Durchtreten des Fahrpedals, insbesondere einem sogenannten Kickdown, durchgeführt wird. In solchen Situationen fordert der Fahrer einen besonders schnellen Anfahrvorgang an, sodass sich hier in besonderer Weise die Vorteile des Verfahrens verwirklichen.

Die Aufgabe wird auch gelöst, indem ein Steuergerät für ein Bremssystem eines Fahrzeugs geschaffen wird, welches eingerichtet ist zur Durchführung einer der zuvor beschriebenen Ausführungsformen des Verfahrens. Dabei verwirklichen sich in Zusammenhang mit dem Steuergerät insbesondere die Vorteile, die bereits in Zusammenhang mit dem Verfahren erläutert wurden.

Die Aufgabe wird auch gelöst, indem ein Bremssystem für ein Fahrzeug geschaffen wird, welches eine elektromotorisch aktuierte, erste Bremseinrichtung aufweist, wobei das Bremssystem außerdem eine von der ersten Bremseinrichtung verschiedene, zweite Bremseinrichtung aufweist. Das Bremssystem weist außerdem ein Steuergerät auf, welches eingerichtet ist zur Durchführung eines Verfahrens nach einer der zuvor beschriebenen Ausführungsformen, oder welches gemäß einem der zuvor beschriebenen Ausführungsbeispiele ausgebildet ist. Dabei verwirklichen sich in Zusammenhang mit dem Bremssystem insbesondere die Vorteile, die bereits im Zusammenhang mit dem Verfahren und dem Steuergerät erläutert wurden.

Vorzugsweise ist das erste Bremssystem als automatische Parkbremse (APB) ausgebildet. Insbesondere sind dabei bevorzugt wenigstens zwei Elektromotoren an wenigstens zwei Radbremsen, insbesondere an einer Hinterachse des Fahrzeugs, angeordnet, sodass die erste Bremseinrichtung als APB-M-System (Motor on Caliper) ausgebildet ist.

Die zweite Bremseinrichtung ist vorzugsweise als Betriebsbremse eines Fahrzeugs ausgebildet, insbesondere als hydraulische Bremseinrichtung. Dabei ist es möglich, dass die zweite Bremseinrichtung als elektronisches Bremskraftverteilungssystem ausgebildet ist, und/oder einen elektrischen oder elektronischen Bremskraftverstärker aufweist.

Vorzugsweise weist das Bremssystem eine Druckmodulationseinrichtung auf, die eingerichtet ist, um eine hohe Druckdynamik bereitzustellen. Damit kann ein sehr schneller Druckaufbau erzeugt werden, und ein aufgebauter Bremsdruck kann auch sehr schnell wieder abgebaut werden, was einen besonders schnellen Anfahrvorgang ermöglicht.

Zusätzlich oder alternativ weist das Bremssystem bevorzugt eine Kraftmodulationseinrichtung auf, welche eine hohe Dynamik aufweist. Auch dies ermöglicht in besonders günstiger Weise einen schnellen Anfahrvorgang.

Die Aufgabe wird schließlich auch gelöst, indem ein Fahrzeug geschaffen wird, welches ein Bremssystem nach einem der zuvor beschriebenen Ausführungsbeispiele aufweist. Dabei ergeben sich in Zusammenhang mit dem Fahrzeug die Vorteile, die bereits in Zusammenhang mit dem Verfahren, dem Steuergerät und dem Bremssystem erläutert wurden.

Das Fahrzeug ist bevorzugt als Kraftfahrzeug, insbesondere als Personenwagen, als Lastkraftwagen oder als Nutzfahrzeug ausgebildet.

Die Erfindung wird im folgenden anhand der Zeichnung näher erläutert. Dabei zeigen:
- Figur 1: eine schematische Detaildarstellung eines Ausführungsbeispiels eines Fahrzeugs mit einem Bremssystem;
- Figur 2: eine diagrammatische Darstellung eines Lösevorgangs einer elektromotorisch aktuierten Bremseinrichtung ohne Unterstützung durch eine zweite Bremseinrichtung, und
- Figur 3: eine entsprechende Darstellung eines Lösevorgangs mit Unterstützung durch eine zweite Bremseinrichtung.

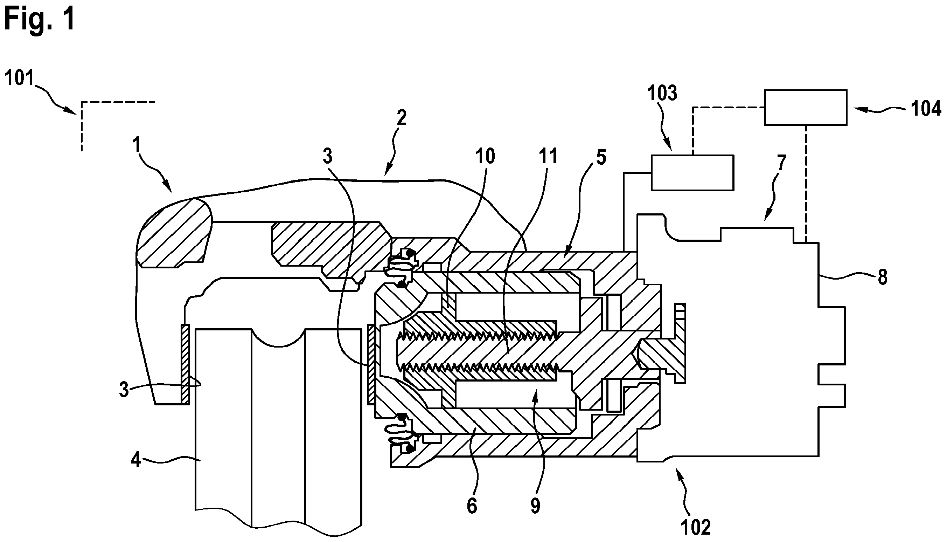

Figur 1 zeigt in einer vereinfachten Schnittdarstellung ein Bremssystem 1 eines Fahrzeugs 101, mit einer ersten, elektromotorisch aktuierten Bremseinrichtung 102 und einer zweiten, nicht elektromotorisch aktuierten Bremseinrichtung 103. Das Bremssystem 1 weist eine Scheibenbremse auf, wobei ein Bremssattel 2 vorgesehen ist, der Bremsbeläge 3 trägt, zwischen denen eine mit einem Rad des Fahrzeugs 101 verbundene Bremsscheibe 4 verklemmbar beziehungsweise einspannbar ist. Dazu ist dem Bremssattel 2 ein der hier als hydraulische Bremseinrichtung ausgebildeten, zweiten Bremseinrichtung 103 zugeordneter, hydraulischer Aktuator 5 zugeordnet, der einen Bremskolben 6 aufweist, welcher hydraulisch betätigbar ist, um die Bremsscheibe 4 bei Bedarf zwischen den Bremsbelägen 3 einzuspannen. Hierdurch wird insbesondere im Fahrbetrieb des Fahrzeugs 101 ein Bremsmoment auf die Bremsscheibe 4 und damit auf die Räder aufgebracht, das dazu dient, das Fahrzeug 101 zu verzögern.

Die erste Bremseinrichtung 102 ist als Parkbremseinrichtung, insbesondere als automatische Parkbremse, ausgebildet, und weist einen elektromotorischen Aktuator 7 auf, der von einem Elektromotor 8, einem Aktuatorgetriebe 9, das vorliegend als Spindelgetriebe ausgebildet ist, und einem Aktuatorelement 10 gebildet wird. Eine Abtriebswelle des Elektromotors 8 ist dabei drehfest mit einer Antriebsspindel 11 des Aktuatorgetriebes 9 verbunden. Die Antriebsspindel 11 weist ein Außengewinde auf, das mit einem Innengewinde des entlang der Antriebsspindel 11 verfahrbaren Aktuatorelements 10 zusammenwirkt. Durch Ansteuern des Elektromotors 8 wird somit die Antriebsspindel 11 in eine Rotationsbewegung versetzt, um das Aktuatorelement 10 zu verlagern. Dabei ist das Aktuatorelement 10 von einer Freigabestellung in eine Zuspannstellung und zurück verlagerbar, wobei das Aktuatorelement 10 in der Zuspannstellung den Bremskolben 6 gegen die Bremsscheibe 4 verschiebt und dadurch den Bremssattel 2 zuspannt. Der Bremskolben 6 ist demnach der ersten Bremseinrichtung 102 und der zweiten Bremseinrichtung 103 gemeinsam zugeordnet.

Das Aktuatorelement 10 ist koaxial zu dem Bremskolben 6 und innerhalb des Bremskolbens 6 angeordnet. Durch das Aktuatorgetriebe 9 erfolgt eine Wandlung der Rotationsbewegung der Antriebsspindel 11 in eine translatorische Bewegung des Aktuatorelements 10. Insoweit entspricht die Radbremseinrichtung bekannten Radbremseinrichtungen.

Es ist ein Steuergerät 104 vorgesehen, welches eingerichtet ist, um die erste Bremseinrichtung 102 und die zweite Bremseinrichtung 103 anzusteuern.

Ist die erste Bremseinrichtung 102 zugespannt, wirkt eine Klemmkraft über den Bremskolben 6 auf das Aktuatorelement 10 und damit zugleich auf die Antriebsspindel 11, wobei die erste Bremseinrichtung 102 selbsthemmend ausgebildet ist, sodass sehr hohe Klemmkräfte wirken. Somit wirkt auf den Elektromotor 8 beim Lösen der ersten Bremseinrichtung 102 ein hohes Lastmoment, was dessen Anlaufen behindert und insbesondere verzögert.

Um den Lösevorgang zu beschleunigen, kann mittels der zweiten Bremseinrichtung 103 insbesondere ein hydraulischer Bremsdruck aufgebaut werden, welcher den Bremskolben 6 in Zuspannrichtung drängt und so das Aktuatorelement 10 entlastet. Der Elektromotor 8 kann dann ohne Last anlaufen und sehr schnell seine Leerlaufdrehzahl erreichen, was den Lösevorgang erheblich beschleunigt.

Dies ist besonders schnell möglich, wenn die erste Bremseinrichtung 102 bereits in Löserichtung angesteuert wird, bevor die zweite Bremseinrichtung 103 eine vorbestimmte Zuspannkraft erreicht.

Es wird daher zum Lösen der ersten Bremseinrichtung 102 bevorzugt die zweite Bremseinrichtung 103 in zugespanntem Zustand der ersten Bremseinrichtung 102 in Zuspannrichtung angesteuert, um an dem Bremskolben 6 eine vorbestimmte Zuspannkraft zu erzeugen, wobei die erste Bremseinrichtung 102 in Löserichtung angesteuert wird, bevor die zweite Bremseinrichtung 103 die vorbestimmte Zuspannkraft erreicht.

Bevorzugt werden die erste Bremseinrichtung 102 und die zweite Bremseinrichtung 103 simultan, insbesondere gleichzeitig, angesteuert.

Die erste Bremseinrichtung 102 und die zweite Bremseinrichtung 103 werden gemäß einem nicht erfindungsgemäßem Ausführungsbeispiel angesteuert, wenn ein Anfahrwunsch eines Fahrers des Fahrzeugs 101 erkannt wird, wobei dieser insbesondere anhand einer Pedalstellung des Fahrzeugs 101 und/oder anhand einer Gangwahl des Fahrers erkannt werden kann. Es ist möglich, dass das hier beschriebene Löseverfahren nur dann durchgeführt wird, wenn eine Fahrpedalstellung oder -betätigung erkannt wird, die über eine vorbestimmte Grenzstellung oder eine vorbestimmte Betätiungsgeschwindigkeit des Fahrpedals hinausgeht. Dies ist erfindungsgemäß der Fall bei einem sogenannten Kickdown, also einem vollständigen Durchtreten des Fahrpedals zur Durchführung eines Kavalierstarts.

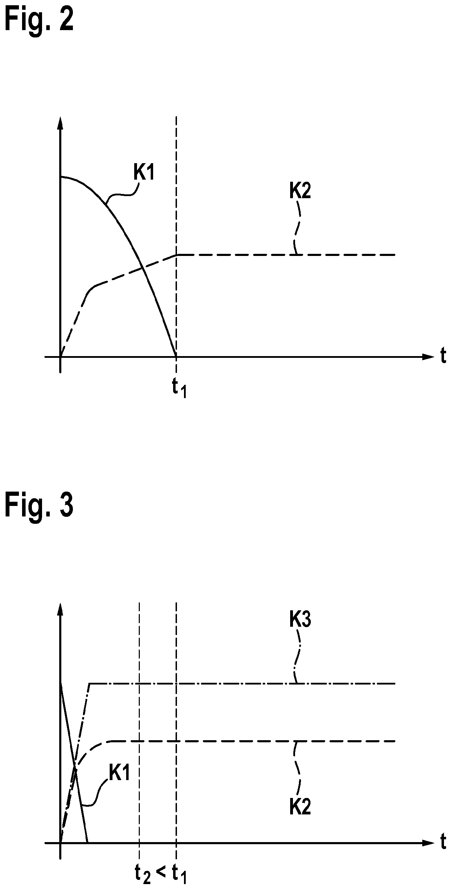

Figur 2 zeigt eine diagrammatische Darstellung eines Lösevorgangs der ersten Bremseinrichtung 102 ohne Unterstützung durch die zweite Bremseinrichtung 103. Dabei sind hier aufgetragen gegen die Zeit t eine erste, durchgezogene Kurve K1, die den Verlauf einer Zuspannkraft beim Lösen der ersten Bremseinrichtung 102 darstellt, sowie eine zweite, gestrichelte Kurve K2, welche den Drehzahlverlauf des Elektromotors 8 bei dem Lösevorgang darstellt. Dabei zeigt sich, dass die Zuspannkraft gemäß der ersten Kurve K1 nur relativ langsam abgebaut wird, wobei sie erst zu einem ersten Zeitpunkt t₁ vollständig verschwindet. Entsprechend erfolgt auch der Drehmomentaufbau - wie durch die zweite Kurve K2 dargestellt - des Elektromotors 8 verzögert, weil dieser unter Last anläuft, wobei eine Leerlaufdrehzahl im Wesentlichen erst zu dem ersten Zeitpunkt t₁ erreicht wird. Hierdurch wird der Lösevorgang insgesamt erheblich verzögert.

Für die folgende Diskussion wird davon ausgegangen, dass das Aktuatorelement 10 bis zum vollständigen Verschwinden der Zuspannkraft zu dem ersten Zeitpunkt t₁ einen bestimmten Weg zurücklegt.

In Figur 3 ist eine diagrammatische Darstellung eines Lösevorgangs der ersten Bremseinrichtung 102 mit Unterstützung der zweiten Bremseinrichtung 103 dargestellt. Gleiche und funktionsgleiche Elemente sind mit gleichen Bezugszeichen versehen, sodass insofern auf die vorangegangene Beschreibung verwiesen wird. Hier ist noch eine dritte, strichpunktierte Kurve K3 gegen die Zeit aufgetragen, die den Verlauf einer Zuspannkraft darstellt, welche durch die zweite Bremseinrichtung 103 aufgebracht wird. Dabei zeigt sich, dass in gleichem Maße, wie die Zuspannkraft gemäß der dritten Kurve K3 durch die zweite Bremseinrichtung 103 aufgebaut wird, die auf den Elektromotor 8 bremsend wirkende Zuspannkraft gemäß der ersten Kurve K1 abfällt. Der Elektromotor 8 wird also zunehmend entlastet, wobei dies insbesondere durch die hohe Dynamik der zweiten Bremseinrichtung 103 sehr schnell erfolgen kann.

Darüber hinaus werden die erste Bremseinrichtung 102 und die zweite Bremseinrichtung 103 parallel angesteuert, sodass durch diesen Effekt und durch die Entlastung des Elektromotors 8 sehr schnell - wie anhand der zweiten Kurve K2 ersichtlich - die Leerlaufdrehzahl erreicht werden kann.

Dabei zeigt sich, dass der in Figur 2 dargestellt, unter Last zurückgelegte Weg des Aktuatorelements 10 bis zum vollständigen Lösen der Zuspannkraft unter lastfreien Bedingungen gemäß Figur 3 hier bereits zu einem zweiten Zeitpunkt t₂ durchlaufen wird, wobei der zweite Zeitpunkt t₂ kleiner ist als der hier zum Vergleich ebenfalls eingezeichnete, erste Zeitpunkt t₁. Dies zeigt deutlich, dass der Lösevorgang der ersten Bremseinrichtung 102 aufgrund der Unterstützung durch die zweite Bremseinrichtung 103 und insbesondere durch die parallele Ansteuerung der Bremseinrichtungen 102, 103 schneller erfolgen kann. Dabei können bevorzugt 25 % oder sogar mehr der Gesamtlösezeit eingespart werden.

Insgesamt zeigt sich so, dass mithilfe des Verfahrens, des Steuergeräts 104, des Bremssystems 1 und bei dem Fahrzeug 101 ein schnelles Lösen der ersten Bremseinrichtung 102 möglich ist, wobei insbesondere ein schneller Anfahrwunsch eines Fahrers, insbesondere in Form eines Kavalierstarts, unterstützt werden kann.

## Patentansprüche

1. Verfahren zum Lösen einer elektromotorisch aktuierten, ersten Bremseinrichtung (102) für ein Fahrzeug (101), wobei
- im zugespannten Zustand der ersten Bremseinrichtung (102) eine zweite Bremseinrichtung (103) für das Fahrzeug (101) in eine Zuspannrichtung angesteuert wird, um an einem der ersten Bremseinrichtung (102) und der zweiten Bremseinrichtung (103) gemeinsam zugeordneten Bremskolben (6) eine vorbestimmte Zuspannkraft zu erzeugen, wobei
- die erste Bremseinrichtung (102) in eine Löserichtung angesteuert wird, bevor die zweite Bremseinrichtung (103) die vorbestimmte Zuspannkraft erreicht,
- **dadurch gekennzeichnet, dass** das Verfahren nur bei einem vollständigen Durchtreten eines Fahrpedals zur Durchführung eines Kavalierstarts durchgeführt wird.

2. Verfahren nach Anspruch 1, **dadurch gekennzeichnet, dass** die erste Bremseinrichtung (102) und die zweite Bremseinrichtung (103) simultan angesteuert werden.

3. Verfahren nach einem der vorhergehenden Ansprüche, **dadurch gekennzeichnet, dass** die Zuspannkraft von der zweiten Bremseinrichtung (103) hydraulisch erzeugt wird.

4. Steuergerät (104) für ein Bremssystem (1) eines Fahrzeugs (101), **dadurch gekennzeichnet, dass** das Steuergerät (104) eingerichtet ist zur Durchführung eines Verfahrens nach einem der Ansprüche 1 bis 3.

5. Bremssystem (1) für ein Fahrzeug (101), mit einer elektromotorisch aktuierten, ersten Bremseinrichtung (102), einer von der ersten Bremseinrichtung (102) verschiedenen, zweiten Bremseinrichtung (103), und einem Steuergerät (104) nach Anspruch 4, welches mit der ersten Bremseinrichtung (102) und mit der zweiten Bremseinrichtung (103) zu deren Ansteuerung wirkverbunden ist.

6. Bremssystem (1) nach Anspruch 5, **dadurch gekennzeichnet, dass** die erste Bremseinrichtung (102) als automatische Parkbremse ausgebildet ist, wobei vorzugsweise die zweite Bremseinrichtung (103) als Betriebsbremse eines Fahrzeugs (101) ausgebildet ist.

7. Fahrzeug (101), **gekennzeichnet durch** ein Bremssystem (1) nach einem der Ansprüche 5 und 6.

## Claims

1. Method for releasing a first electric motor-actuated brake device (102) for a vehicle (101), wherein
- with the first brake device (102) in the clamped state, a second brake device (103) for the vehicle (101) is actuated in a clamping direction in order to produce a predetermined clamping force on a brake piston (6) that is associated with the first brake device (102) and the second brake device (103) in common, wherein
- the first brake device (102) is actuated in a release direction before the second brake device (103) reaches the predetermined clamping force,
- **characterized in that** the method is carried out only in the event of a full depression of a gas pedal for performing a racing start.

2. Method according to Claim 1, **characterized in that** the first brake device (102) and the second brake device (103) are actuated simultaneously.

3. Method according to any one of the preceding claims, **characterized in that** the clamping force is produced hydraulically by the second brake device (103).

4. Control unit (104) for a brake system (1) of a vehicle (101), **characterized in that** the control unit (104) is arranged to perform a method according to any one of Claims 1 to 3.

5. Brake system (1) for a vehicle (101), with a first electric motor-actuated brake device (102), a second brake device (103) that is different from the first brake device (102), and with a control unit (104) according to Claim 4, which is operatively connected to the first brake device (102) and to the second brake device (103) for the actuation thereof.

6. Brake system (1) according to Claim 5, **characterized in that** the first brake device (102) is embodied as an automatic parking brake, wherein the second brake device (103) is preferably embodied as a service brake of a vehicle (101).

7. Vehicle (101), **characterized by** a brake system (1) according to any one of Claims 5 and 6.

## Revendications

1. Procédé pour relâcher un premier dispositif de frein (102) actionné par un moteur électrique pour un véhicule (101), dans lequel
- dans l'état serré du premier dispositif de frein (102), on commande un second dispositif de frein (103) pour le véhicule (101) dans un état serré afin de produire sur un piston de frein (6) associé en commun au premier dispositif de frein (102) et au second dispositif de frein (103) une force de serrage prédéterminée, et
- on commande le premier dispositif de frein (102) dans le sens du relâchement, avant que le second dispositif de frein (103) atteigne la force de serrage prédéterminée,
- **caractérisé en ce que** le procédé n'est mis en œuvre que lorsqu'une pédale des gaz est totalement appuyée pour effectuer un démarrage en trombe.

2. Procédé selon la revendication 1, **caractérisé en ce que** l'on commande simultanément le premier dispositif de frein (102) et le second dispositif de frein (103).

3. Procédé selon l'une quelconque des revendications précédentes, **caractérisé en ce que** l'on produit la force de serrage de façon hydraulique au moyen du second dispositif de frein (103).

4. Appareil de commande (104) pour un système de frein (1) d'un véhicule (101), **caractérisé en ce que** l'appareil de commande (104) est conçu pour l'exécution d'un procédé selon l'une quelconque des revendications 1 à 3.

5. Système de frein (1) destiné à un véhicule (101), ledit système de frein comprenant un premier dispositif de frein (102) actionné par un moteur électrique, un second dispositif de frein (103) différent du premier dispositif de frein (102) et une unité de commande (104) selon la revendication 4 qui est reliée fonctionnellement au premier dispositif de frein (102) et au second dispositif de frein (103) afin de commander ceux-ci.

6. Système de frein (1) selon la revendication 5, **caractérisé en ce que** le premier dispositif de frein (102) est formé par un frein de stationnement automatique, dans lequel le second dispositif de frein (103) est de préférence formé par un frein de service d'un véhicule (101).

7. Véhicule (101), **caractérisé par** un système de frein (1) selon une des revendications 5 et 6.
